# EUROPEAN PATENT SPECIFICATION

(11) **EP 1 574 945 B1**
(45) Date of publication and mention of the grant of the patent: **21.08.2013**
(21) Application number: 04100903.6
(22) Date of filing: 05.03.2004
(51) Int. Cl.: G06F 3/12

(54) **Printing method**
Druckverfahren
Procédé d'impression

(43) Date of publication of application: 14.09.2005
(73) Proprietor: Agfa HealthCare NV, 2640 Mortsel (BE)
(72) Inventor: Tytgat, Bart AGFA-GEVAERT, 2640, Mortsel (BE)
(74) Representative: Theunis, Patrick

(56) References cited:
- US-A- 6 088 120
- US-A1- 2004 039 811
- US-B1- 6 515 756
- NEOLOGICA: "DICOMJET"[Online] 26 June 2003 (2003-06-26), - 20 September 2003 (2003-09-20) pages 1-4, XP002317453 Retrieved from the Internet: URL:http://web.archive.org/web/20030920221 145/www.neologica.it/download/files/Brochu reDICOMJet.PDF> [retrieved on 2005-02-11]

## Description

### FIELD OF THE INVENTION

The present invention relates to hard copy recording of medical images having different characteristics on a single physical printer or on one of a series of available printers on a data communication network.

### BACKGROUND OF THE INVENTION

Medical digital images acquired by a large number of image acquisition devices and pertaining to a lot of different types of medical examinations are commonly sent by a modality or a workstation to a printer for the generation of a hard copy.

The DICOM (Digital Imaging and Communications in Medicine) standards specify the conformance requirements for communicating medical digital images among printers, workstation, acquisition devices and servers.

Although a large number of items concerning data communication are prescribed in this protocol some items still need further consideration.

Depending on the type of image specific characteristics are imposed to the hard copy.
For example in case of a hard copy of a mammographic image care is taken that the transparent border at the thorax edge of the image is kept minimal so that the dazzling effect caused by the transparent area when left and right breast images are put side by side on a viewing box, is kept minimal.
Furthermore for mammographic images typically a higher maximum density value is set than for general radiography and a dedicated recording material is chosen.

In the DICOM Print protocol identification of an image as mammographic image is not possible.
Consequentially in practice mammographic images are commonly printed on a dedicated printer which is adjusted for this type of application.

Another issue with regard to medical images is that some regulations such as the HIPAA regulation (Health Insurance Portability and Accountability Act) in the United States require medical images to be communicated via a secured communication. However, not all modalities operate according to the requirements for secure communication. Consequentially state of the art mode of operation is to provide dedicated printers which are either adapted for secure or for non-secure communication.

A DICOM modality may send a DICOM print job to a printer without having assigned a value to a specific attribute which is required for optimal rendition of the hard copy image. Like wise a DICOM modality may have assigned a certain value to an attribute which value is however not optimally for hard copy rendition on the addressed printer.
A prior art solution is either to fill in a specific value for the missing value for the attribute or to overrule the set value by another value. However, the prior art only permits to fill out a single value or to overrule a set value by a single, preset value for a certain modality.

For example in case a printer has four different output trays, the above-described prior art solution does provide a procedure suitable to select each of these output trays.

US 6 498 656 B1 discloses a method of printing images with different characteristics on a physical printer. More than one logical printer is defined and for a print job defined by a client for a specific logical printer a set of pre-defined characteristics (attributes defining how the print job will be printed) is selected and applied to said physical printer when performing said print job.

US 6 515 756 discloses a method of controlling print job distribution to one of a plurality of printers or print queues. A subset of printers is elected by applying a criterion to a set of printers. The determined subset is dependent upon status information.

Neologica: 'Dicomjet' [online] 26 June 2003 - 20 September 2003, URL:http://web.archive.org/web/20030920221145/www.neologica.it/downl oad/files/brochureDICOMJet.pdf relates to the DICOM protocol and discloses an application wherein a logical printer is defined as a Print Service Class Provider with an associated Called Application Entity Title and wherein the Called Application Entity Title is associated with a DICOM modality and selects settings to be applied to a DICOM printer.

### SUMMARY OF THE INVENTION

To overcome the above-mentioned problems the present invention provides a method of printing medical images with different characteristics on a physical printer as set out in claim 1.

Logical printers are defined as a DICOM Print Service Class Providers with associated Called Application Entity Title and occasionally port number. A modality has a Calling Application Entity title.
For a combination of Calling Application Entity Title, called Application Entity Title (and occasionally port number) a DICOM Host profile with specific DICOM settings is defined in advance.
These settings are selected and applied to the physical printer to which the print job is sent.

In the context of the present invention the following terms are to be interpreted as explained below.

A modality refers to an image acquisition device generating a (digital) signal representation of an image or alternatively a workstation.

DICOM Print Server is a software component that administers the different DICOM print service class providers and makes the link to the DICOM host profile and the decision table referred to below.

When reference is made to a 'printer server' reference is made to a product which controls the operation of a plurality of individual printers (occasionally of different types) and which sends incoming print jobs to these printers taking into account a number of rules. With regard to a modality this printer server behaves as a printer having all capabilities of the individual printers.

Examples of different characteristics of images are the type of image (mammographic image, general radiography image), the kind of transmission used for an image (secure, non-secure) etc.

Examples of print characteristics are the lay out of an image, the minimal/maximal density of an image etc.

Further advantages and embodiments of the present invention will become apparent from the following description [and drawings].

### BRIEF DESCRIPTION OF THE DRAWINGS

Fig. 1 generally illustrates the use of a DICOM print server in accordance with the present invention in an environment in which modalities are coupled to a printer or to a printer server on a hospital data communication network,
Fig. 2 illustrates the use of a DICOM print server and associated DICOM host profile in a printer,

### DETAILED DESCRIPTION OF THE INVENTION

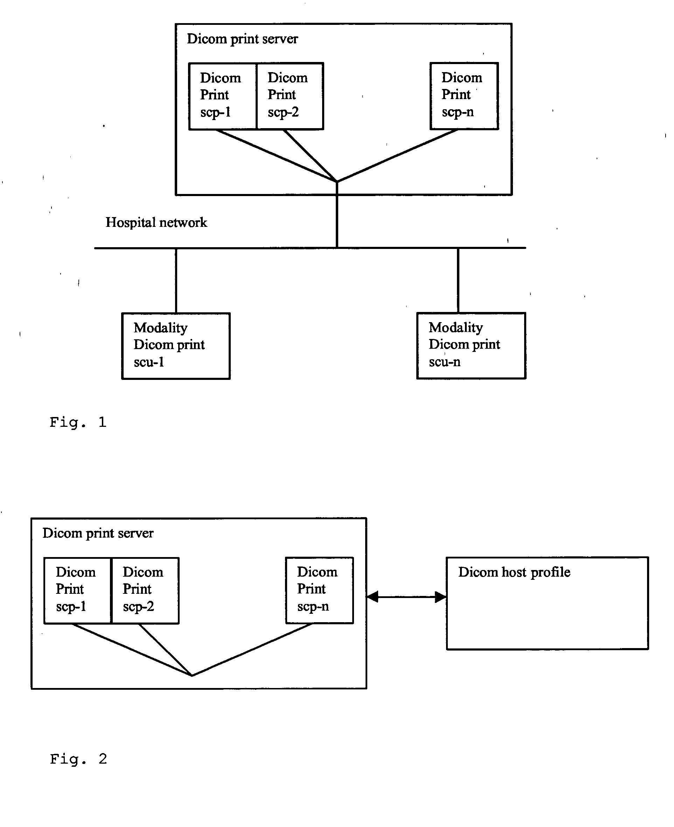

Figure 1 relates to a hospital data communication network to which a plurality of modalities (in this particular example there are two modalities) and at least one printer such as a thermal printer are coupled. The modalities are programmed to communicate with the remote printer over the hospital network preferably in conformance with the DICOM standard.

The modalities run the DICOM print SCU (service class user) software component. The service class users are identified according to the DICOM protocol by a unique "calling Application Entity Title".

A printer or a printer server (see explanation with regard to figures 2 and 3) runs a software component called DICOM Print Server.
DICOM Print Server is a software component that initiates the operation of different DICOM Print Service Class Providers (SCP) and links the DICOM Print service class users to one of a series of DICOM Print Service Class Providers.

In a first embodiment illustrated in figure 2, the DICOM Print Server is used in printer coupled to the modality via a hospital data communication network.

Each of the DICOM Print SCP's defined by the DICOM Print Server is uniquely defined by a 'Called Application Entity title' and occasionally also a port number.

According to the present invention for each combination of a "calling Application Entity title", a "called application entity title" (occasionally supplemented by a port number), a unique key is defined. This unique key points to a DICOM host profile with specific DICOM settings.
Such specific DICOM settings are for example additions to what is sent by a modality, or data overruling settings sent by the modality etc.).

The DICOM host profile identified for the combination of Calling AE Title, Called AE Title and occassionally a port number is applied when the settings of the printer are adjusted in order to execute the print job sent by the modality to the printer.

If a modality defines a print job, the SCU defines a Called AE Title and a port number and sends the job to the printer where the DICOM Print Server software retrieves the DICOM host profile corresponding with the combination of calling AE title , called AE title and port number.

For example suppose a mammographic image acquired by a modality is to be printed on a thermal printer that is not a dedicated mammography printer and that is accordingly not adjusted to the specific requirements for mammographic images such as high maximum density, small transparent boarders at thorax edge etc.

Since the DICOM protocol does not provide an identification of the fact that the image is a mammographic image, the host profile is set up so that it comprises a flag the specific value of which identified whether or not the sent image is a mammographic image.
In case the flag identifies that the image indeed is a mammographic image, additional printer characteristics that are typical for mammographic images can be added to the print job such as details on the location of the image relative to the borders of the print material print format or an identification of the recording material to be selected (in DICOM terms: medium size and film type) or characteristics on the required maximum density etc.

## Claims

1. Method of printing images on a physical printer, said images pertaining to different types of medical examinations or being medical images transmitted either by secure or by insecure transmission from a modality to a printer **characterized in that**
- more than one logical printer is defined as a DICOM print Service Class Provider with associated Called Application Entity Title; and
- for a print job for a specific logical printer a set of pre-defined print characteristics, associated with the combination of said modality and a logical printer is selected by combining at least a Calling Application. Entity title defining said modality and said called Application Entity title with a DICOM Host profile with specific DICOM settings,
- said settings are applied to said physical printer when performing a print job.

## Patentansprüche

1. Verfahren zum Drucken von Bildern auf einem physischen Drucker, wobei sich die Bilder auf unterschiedliche Typen medizinischer Untersuchungen beziehen oder medizinische Bilder sind, die entweder durch sichere oder unsichere Übertragung von einer Modalität zu einem Drucker übertragen werden, **dadurch gekennzeichnet, dass**
- mehr als ein logischer Drucker als DICOM Print Service Class Provider mit zugehörigem Called Application Entity Title definiert wird, und
- für einen Druckauftrag für einen spezifischen logischen Drucker ein Satz vordefinierter Druckeigenschaften, welcher der Kombination der Modalität und eines logischen Druckers zugeordnet ist, ausgewählt wird, indem mindestens ein Calling Application Entity Title, der die Modalität und den Called Application Entity Title definiert, mit einem DICOM Host Profile mit spezifischen DICOM-Einstellungen kombiniert wird,
- die Einstellungen beim Ausführen eines Druckauftrags auf den physischen Drucker angewendet werden.

## Revendications

1. Procédé pour l'impression d'images sur une imprimante physique, lesdites images se rapportant à différents types d'examens médicaux ou étant des images médicales transmises d'une modalité à une imprimante par transmission sécurisée ou non sécurisée, **caractérisé en ce que**
- plus d'une imprimante logique est définie comme DICOM Print Service Class Provider comprenant un Called Application Entity Title associé, et
- pour un travail d'impression assigné à une imprimante logique spécifique, un ensemble de caractéristiques d'impression prédéfinies associé à la combinaison de ladite modalité et d'une imprimante logique est sélectionné en combinant au moins un Calling Application Entity Title définissant ladite modalité et ledit Called Application Entity Title avec un DICOM Host Profile comprenant des réglages DICOM spécifiques,
- lesdits réglages sont appliqués à l'imprimante physique lors de l'exécution d'un travail d'impression.
